# EUROPEAN PATENT APPLICATION

(11) **EP 3 623 807 A1**
(43) Date of publication of application: **18.03.2020**
(21) Application number: 19193306.8
(22) Date of filing: 23.08.2019
(51) Int. Cl.: G01N 29/04, G01N 29/34

(54) **METHOD FOR NONDESTRUCTIVE TESTING OF JOINT BETWEEN WIRE AND ELECTRICAL TERMINAL**

(30) Priority: 11.09.2018 US 201816127304
(71) Applicant: Aptiv Technologies Limited, 14004 St. Michael (BB)
(72) Inventor: WEIDNER, Jonathan D., Conneautvill, PA Pennsylvania 16406 (US); HANDEL, Jeffrey M., Warren, OH Ohio 44483 (US)
(74) Representative: Westphal, Mussgnug & Partner Patentanwälte mbB

(57) **Abstract**

A method (100) of nondestructive testing of a joint (16) between an electrical terminal (12) and a wire cable (10) that is bonded to the electrical terminal (12) is presented herein. This method (100) includes the steps of providing an ultrasonic transducer (18) in electrical communication with an electrical signal generator (20) and signal analyzer, placing the transducer (18) in ultrasonic communication with the joint (16), transmitting a first ultrasonic signal (22) via stimulation of the transducer (18) by a first electrical signal having a first frequency from the signal generator (20), receiving a first reflected signal (26) of the first ultrasonic signal (22) via the ultrasonic transducer (18), transmitting a second ultrasonic signal (28) via stimulation of the transducer (18) by a second electrical signal having a second frequency different than the first frequency from the signal generator (20), receiving a second reflected signal (30) of the second ultrasonic signal (28) via the transducer (18), and determining the quality of the joint (16) by analyzing the first and second reflected signals (26, 30).

## Description

The invention generally relates to a method for nondestructive testing of a joint between a wire and an electrical terminal.

The present invention will now be described, by way of example with reference to the accompanying drawings, in which:
Fig. 1 is a schematic view of an apparatus configured for nondestructive testing of a joint between a wire and an electrical terminal according to a first embodiment of the invention;
Fig. 2 is a flow chart of a method of nondestructive testing of a joint between a wire and an electrical terminal according to a second embodiment of the invention;
Fig. 3 is a schematic view of an alternative apparatus configured for nondestructive testing of a joint between a wire and an electrical terminal according to a third embodiment of the invention;
Fig. 4 is a perspective view of a transducer array of the apparatus of Fig. 3 according to the third embodiment of the invention; and
Fig. 5 is a cross section view of the transducer array of the apparatus of Fig. 3 according to a fourth embodiment of the invention.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

Wire cables assemblies include electrical terminals attached to the ends of the wire cables. There may be defects in the joint between the terminal and the wire cable, e.g. caused by voids between the wire cables and the terminal, that may not be detectable by visual inspection. A nondestructive testing method is desired where a high percentage of the wire assembles must be inspected for joint quality. Such a method is presented herein.

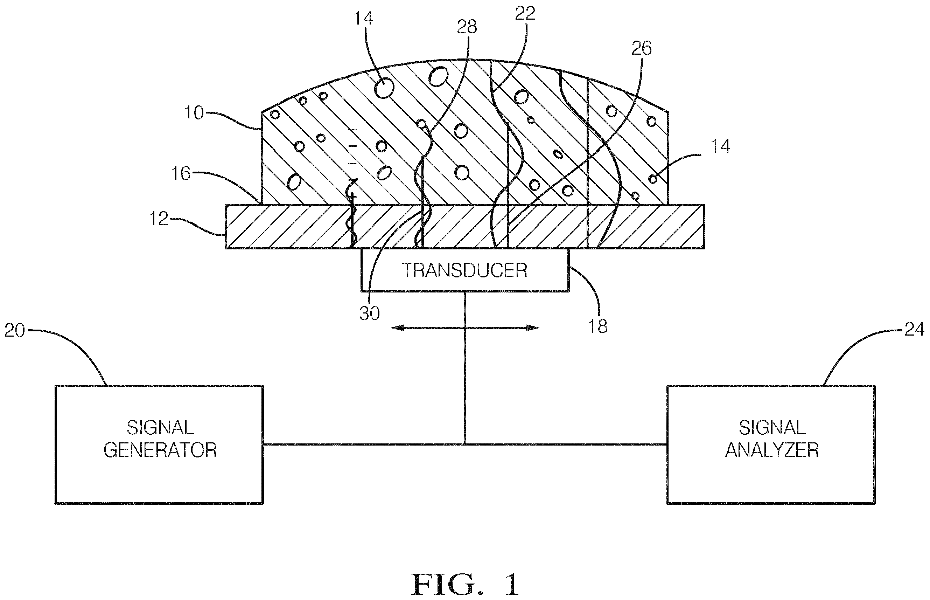

Fig. 1 illustrates a cross section view of a stranded wire cable 10 that has been ultrasonically welded to an electrical terminal, hereinafter referred to as the terminal 12. The ultrasonic welding process joins the stands of the wire cable 10 to the electrical terminal 12 and to each other, thereby forming a "weld nugget 10" 10. The wire cable 10 is shown in cross section as the weld nugget 10 in Fig. 1. As can be seen in Fig. 1, there are voids 14 that are formed between the wire strands in the weld nugget 10 and between the weld nugget 10 and the terminal 12. The size, density, and location of these voids 14 can adversely affect the quality of the welded joint 16 between the wire cable 10 and the terminal 12. As used herein, voids 14 may refer to gaps or cracks in the weld nugget 10 or between the weld nugget 10 and the terminal 12. The voids 14 may be completely contained within the weld nugget 10 or they may extend to a surface of the weld nugget 10. As further shown in Fig. 1, a ultrasonic transducer, hereinafter referred to as the transducer 18 connected to a variable frequency electrical signal generator, hereinafter referred to as the signal generator 20, is placed in contact with the joint 16. The signal generator 20 sends an electrical signals having a first frequency to the transducer 18. This causes transducer 18 to emit an first ultrasonic signal 22 having the first frequency. The transducer 18 is also connected to signal analyzing circuitry 24. The transducer 18 receives a first reflected ultrasonic signal 26, i.e. the echo of the first ultrasonic signal 22. The first reflected signal 26 is transmitted from the transducer 18 to signal analyzing circuitry 24 and is analyzed to determine the depth and size of any voids 14 that may exist in the joint 16.

The signal analyzing circuitry 24 may include a digital signal processor (DSP) and/or a controller having one or more processors and memory. The processors may be a microprocessors, application specific integrated circuits (ASIC), or built from discrete logic and timing circuits (not shown). Software instructions that program the processors may be stored in a non-volatile (NV) memory device (not shown). The NV memory device may be contained within the microprocessor or ASIC or it may be a separate device. Non-limiting examples of the types of NV memory that may be used include electrically erasable programmable read only memory (EEPROM), masked read only memory (ROM), and flash memory.

Different frequencies of ultrasonic signal have different propagation features in the joint 16. Lower frequency, i.e. longer wavelength, ultrasonic signals, penetrate into the joint 16 as shown in Fig. 1 while higher frequency, i.e. shorter wavelength, ultrasonic signals, do not penetrate as far into the joint 16 as shown in Fig. 1. However, higher frequency ultrasonic signals provide finer resolution of voids 14 than lower frequency signals.

Therefore, the signal generator 20 sends another electrical signal having a second frequency this is higher or lower than the first frequency to the transducer 18. This causes transducer 18 to emit a second ultrasonic signal 28 having the second frequency. The transducer 18 receives the second reflected ultrasonic 30 signal and the second reflected signal 30 is analyzed by the signal analyzing circuitry 24 to further determine the depth and size of any voids 14 that may exist in the joint 16. The analysis may additionally or alternatively detect a lack of fusion in the joint 16.

As shown in Fig. 1, the transducer 18 has a single element, e.g. a piezoelectric element, that is used to both transmit the first and second ultrasonic signals 22, 28 and receive the first and second reflected signals 26, 30. As father shown in Fig. 1, the transducer 18 may be moved along the joint 16 to provide data regarding various regions of the joint 16.

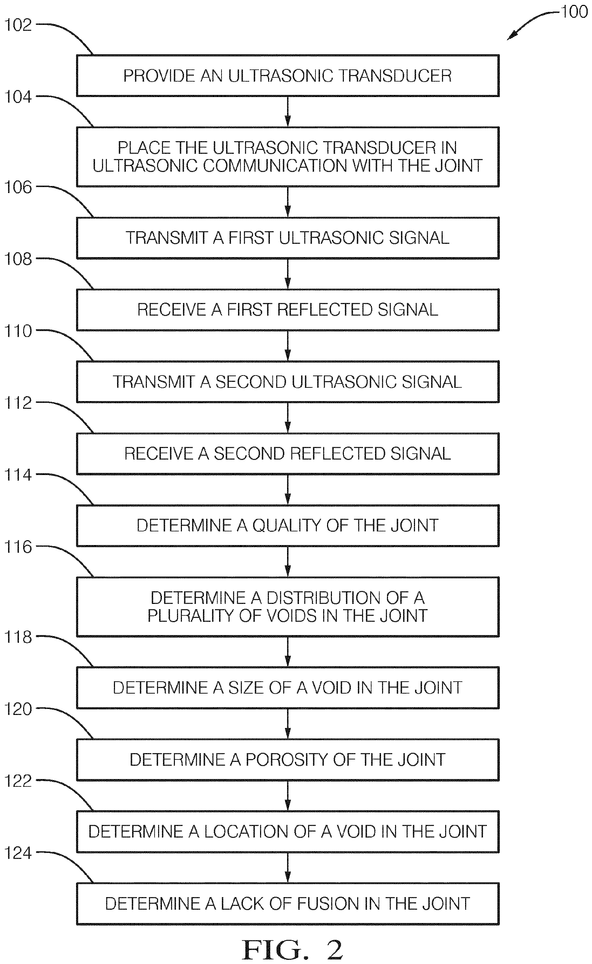

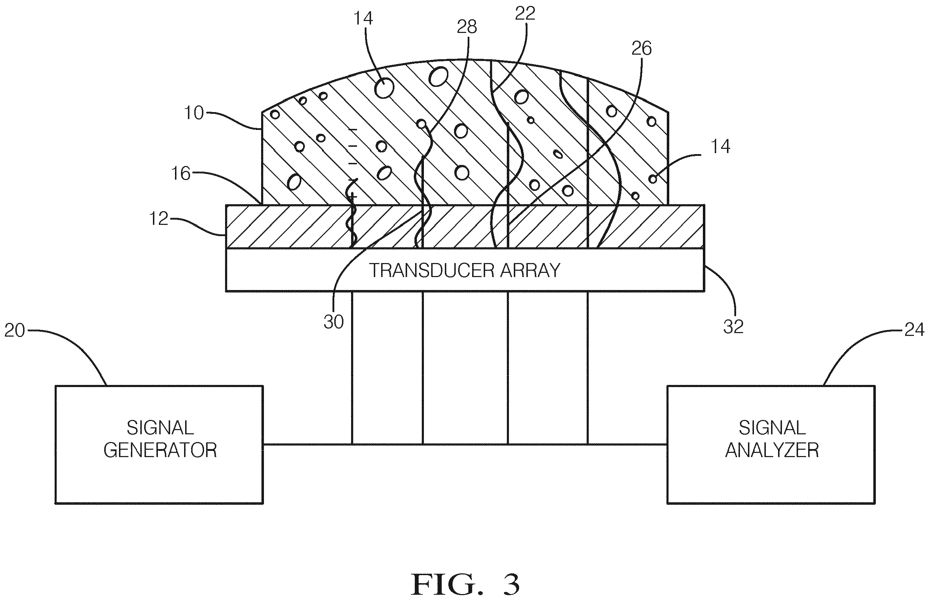

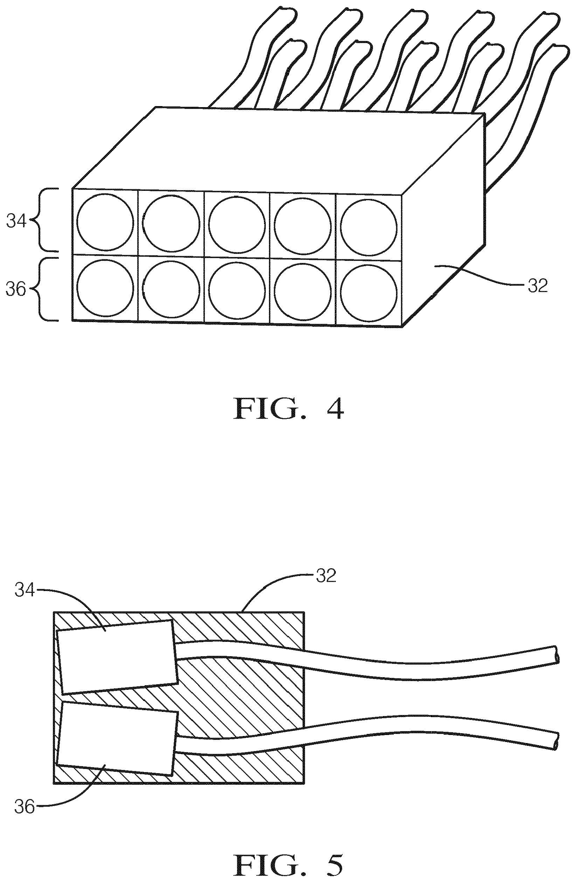

Fig. 2 illustrates an example of a method 100 of nondestructive testing of a joint 16 between a terminal 12 and a wire cable 10 that is bonded to the terminal 12. The method 100 includes the following steps:
STEP 102, PROVIDE AN ULTRASONIC TRANSDUCER, includes providing a transducer 18 that is in electrical communication with a signal generator 20 and signal analyzing circuitry 24. The transducer 18 may consist of a single element that is configured to both transmit the first and second ultrasonic signals 22, 28 and receive the first and second reflected signals 26, 30 as illustrated in Fig. 1. Optionally, the ultrasonic transducer may be a transducer array 32 that comprises a first plurality or first row of elements 34 that are configured to transmit the first and second ultrasonic signals 22, 28 and a second plurality or row of elements 36 that is separate and distinct from the first plurality of elements 34 as shown in Figs. 3 and 4. The second plurality of elements 36 is configured the receive the first and second reflected signals 26, 30. The first plurality of elements 34 may be angled toward the second plurality of elements 36 and the second plurality of elements 36 may be angled toward the first plurality of elements 34 as shown in Fig. 5 in order to direct the first and second ultrasonic signals 22, 28 to a location of particular interest, e.g. the interface between the terminal 12 and the weld nugget 10 formed by the ultrasonically welded wire cable 10. The transducer array 32 may also be configured such that the second plurality of elements 36 transmits the first and second ultrasonic signals 22, 28 while the first plurality of elements 34 receives the first and second reflected signals 26, 30. The transducer array 32 may also be operated as a phased array in order to eliminate the need to physically move the array to direct the transmitted ultrasonic signals to different areas of interest. The configuration and operation of phased ultrasonic transducer arrays is well known to those skilled in the art.
STEP 104, PLACE THE ULTRASONIC TRANSDUCER IN ULTRASONIC COMMUNICATION WITH THE JOINT, includes placing the transducer 18 in ultrasonic communication with the joint 16. In some embodiments, a fluid coupling medium is placed intermediate the ultrasonic transducer 18 and the joint 16. In alternative embodiments, solid coupling media may be used;
STEP 106, TRANSMIT A FIRST ULTRASONIC SIGNAL, includes transmitting a first ultrasonic signal 22 via stimulation of the transducer 18 by a first electrical signal transmitted from the signal generator 20 having a first frequency. The first frequency is preferably in a range of 5 Megahertz (MHz) to 15 MHz;
STEP 108, RECEIVE A FIRST REFLECTED SIGNAL, includes receiving a first reflected signal 26 of the first ultrasonic signal 22 via the transducer 18;
STEP 110, TRANSMIT A SECOND ULTRASONIC SIGNAL, includes transmitting a second ultrasonic signal 28 via stimulation of the transducer 18 by a second electrical signal transmitted from the signal generator 20 having a second frequency different and distinct from the first frequency. The second frequency is also preferably in the range of 5 MHz to 15 MHz;
STEP 112, RECEIVE A SECOND REFLECTED SIGNAL, includes receiving a second reflected signal 30 of the second ultrasonic signal 28 via the transducer 18; and
STEP 114, DETERMINE A QUALITY OF THE JOINT, includes determining a quality of the joint 16 by analyzing the first and second reflected signals 26, 30. The quality of the joint 16 may be determined by using one or more of the optional sub-steps listed below:
STEP 116, DETERMINE A LOCATION OF A VOID IN THE JOINT, is an optional sub-step of STEP 114 that includes determining a location of a void 14 in the joint 16 by analyzing the first and second reflected signals 26, 30. The terminal 12 and the stranded wire cable 10 may be discarded or reworked if it is determined that that the location of the void 14 is an unacceptable location;
STEP 116, DETERMINE A DISTRIBUTION OF A PLURALITY OF VOIDS IN THE JOINT, is an optional sub-step of STEP 114 that includes determining a distribution of a plurality of voids 14 in the joint 16 by analyzing the first and second reflected signals. The terminal 12 and the stranded wire cable 10 may be discarded or reworked if it is determined that that the distribution of the voids 14 is unacceptable;
STEP 118, DETERMINE A SIZE OF A VOID IN THE JOINT, is an optional sub-step of STEP 114 that includes determining a size of a void 14 in the joint 16 by analyzing the first and second reflected signals. The terminal 12 and the stranded wire cable 10 may be discarded or reworked if it is determined that that the size of the void 14 exceeds an allowable size threshold; and
STEP 120, DETERMINE A POROSITY OF THE JOINT, is another optional sub-step of STEP 114 that includes determining a porosity of the joint 16 based on the number of voids 14, the sizes, i.e.. volumes, of the plurality of voids 14 in the joint 16. The terminal 12 and the stranded wire cable 10 may be discarded or reworked if it is determined that that the porosity of the joint 16 exceeds an allowable porosity threshold.
STEP 122, DETERMINE A LOCATION OF A VOID IN THE JOINT, is another optional sub-step of STEP 114 that includes determining a location of a void in the joint by analyzing the first and second reflected signals using the signal analyzing circuitry. The terminal 12 and the stranded wire cable 10 may be discarded or reworked if it is determined that that the location of the void is not within an acceptable area of the joint.
STEP 124, DETERMINE A LACK OF FUSION IN THE JOINT, is another optional sub-step of STEP 114 that includes determining a lack of fusion in the joint by analyzing the first and second reflected signals using the signal analyzing circuitry. The terminal 12 and the stranded wire cable 10 may be discarded or reworked if it is determined that that the lack of fusion exceeds a percentage threshold. As used herein lack of fusion refers to an interface between to elements, such as two wire strands of the wire cable 10 or a wire stand and the terminal 12 that is not bonded. The lack of fusion may also result from an oxide layer between the two wire strands of the wire cable 10 or a wire stand and the terminal 12.

Accordingly, a method 100 of nondestructive testing of a joint 16 between a terminal 12 and a wire cable 10 is provided. The method 100 provides the benefit of inspecting a larger portion of the joint between the wire cable 10 and terminal 12 by using ultrasonic signals having different frequencies. Higher frequency signals can provide a higher resolution inspection of the interface between the terminal 12 and the weld nugget 10 while lower frequency ultrasonic signal can provide inspection of the interior portions of the weld nugget 10.

The example presented herein is directed to a method 100 of nondestructive testing of a joint 16 between a terminal 12 and a wire cable 10 that is ultrasonically welded, however other embodiments of the method may be envisioned that are adapted for nondestructive testing of a joint between an electrical terminal and a wire cable that is joined using different techniques, such as soldering, compression crimping, resistance welding, laser welding, or other processes used to form a joint between a wire cable and a terminal.

The apparatus required for performing this method 100 may be incorporated into an ultrasonic welding device or may be contained in a stand-alone testing station.

While this invention has been described in terms of the preferred embodiments thereof, it is not intended to be so limited, but rather only to the extent set forth in the claims that follow. For example, the above-described embodiments (and/or aspects thereof) may be used in combination with each other. In addition, many modifications may be made to configure a particular situation or material to the teachings of the invention without departing from its scope. Dimensions, types of materials, orientations of the various components, and the number and positions of the various components described herein are intended to define parameters of certain embodiments, and are by no means limiting and are merely prototypical embodiments.

Many other embodiments and modifications within the spirit and scope of the claims will be apparent to those of skill in the art upon reviewing the above description. The scope of the invention should, therefore, be determined with reference to the following claims, along with the full scope of equivalents to which such claims are entitled.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. A method (100) of nondestructive testing of a joint (16) between an electrical terminal (12) and a wire cable (10) that is bonded to said electrical terminal (12), this method (100) comprising:
providing an ultrasonic transducer (18) in electrical communication with a variable frequency electrical signal generator (20) and signal analyzing circuitry (24);
placing the ultrasonic transducer (18) in ultrasonic communication with the joint (16);
transmitting a first ultrasonic signal (22) via stimulation of the ultrasonic transducer (18) by a first electrical signal transmitted from the variable frequency electrical signal generator (20) having a first frequency;
receiving a first reflected signal (26) of the first ultrasonic signal (22) via the ultrasonic transducer (18);
transmitting a second ultrasonic signal (28) via stimulation of the ultrasonic transducer (18) by a second electrical signal transmitted from the variable frequency electrical signal generator (20) having a second frequency different and distinct from the first frequency;
receiving a second reflected signal (30) of the second ultrasonic signal (28) via the ultrasonic transducer (18); and
determining a quality of the joint (16) by analyzing the first and second reflected signals (26, 30) using the signal analyzing circuitry (24).

2. The method (100) according to claim 1, wherein the first frequency is in a range of 5 Megahertz (MHz) to 15 MHz and the second frequency is in a range of 5 MHz to 15 MHz.

3. The method (100) according to claim 1 or 2, wherein the ultrasonic transducer (18) consists of a single element configured to both transmit the first and second ultrasonic signals (22, 28) and receive the first and second reflected signals (26, 30).

4. The method (100) according to any one of the preceding claims, wherein the ultrasonic transducer (18) comprises a first plurality of elements (34) configured to transmit the first and second ultrasonic signals (22, 28) and a second plurality of elements (36) distinct from the first plurality of elements (34), said second plurality of elements (36) configured the receive the first and second reflected signals (26, 30).

5. The method (100) according to claim 4, wherein the first plurality of elements (34) are angled toward the second plurality of elements (36) and the second plurality of elements (36) are angled toward the first plurality of elements (34).

6. The method (100) according to any one of the preceding claims, wherein the method (100) further comprises:
determining a location of a void (14) in the joint (16) by analyzing the first and second reflected signals (26, 30) using the signal analyzing circuitry (24).

7. The method (100) according to claim 6, wherein the method (100) further comprises:
determining a distribution of a plurality of voids (14) in the joint (16) by analyzing the first and second reflected signals (26, 30) using the signal analyzing circuitry (24).

8. The method (100) according to any one of the preceding claims, wherein the method (100) further comprises:
determining a size of a void (14) in the joint (16) by analyzing the first and second reflected signals (26, 30) using the signal analyzing circuitry (24).

9. The method (100) according to claim 8, wherein the method (100) further comprises:
in accordance with a determination that the size of the void (14) exceeds a size threshold:
discarding or reworking the electrical terminal (12) and the stranded wire cable (10).

10. The method (100) according to claim 8 or 9, wherein the method (100) further comprises:
determining the sizes of a plurality of voids (14) in the joint (16) by analyzing the first and second reflected signals (26, 30) using the signal analyzing circuitry (24).

11. The method (100) according to claim 10, wherein the method (100) further comprises:
in accordance with a determination that the size of any one void (14) in the plurality of voids (14) the void (14) exceeds a size threshold:
discarding or reworking the electrical terminal (12) and the stranded wire cable (10).

12. The method (100) according to claim 10 or 11, wherein the method (100) further comprises:
determining a porosity of the joint (16) based on the sizes of the plurality of voids (14) in the joint (16); and
in accordance with a determination that the porosity of the joint (16) exceeds a porosity threshold:
discarding or reworking the electrical terminal (12) and the stranded wire cable (10).

13. The method (100) according to any one of the preceding claims, wherein the method (100) further comprises:
determining a lack of fusion in the joint (16) by analyzing the first and second reflected signals (26, 30) using the signal analyzing circuitry (24).

14. The method (100) according to claim 13, wherein the method (100) further comprises:
in accordance with a determination that the lack of fusion exceeds a percentage threshold:
discarding or reworking the electrical terminal (12) and the stranded wire cable (10).

15. The method (100) according to any one of the preceding claims, wherein the wire cable (10) is a stranded wire cable (10).

16. The method (100) according to any one of the preceding claims, wherein the wire cable (10) is bonded to the electrical terminal (12) using an ultrasonic welding process.
